# EUROPÄISCHE PATENTSCHRIFT

(11) **EP 1 208 543 B1**
(45) Veröffentlichungstag und Bekanntmachung des Hinweises auf die Patenterteilung: **17.08.2005**
(21) Anmeldenummer: 00951444.9
(22) Anmeldetag: 25.07.2000
(51) Int. Cl.: G07F 7/10, G07C 9/00

(54) **VERFAHREN ZUR AUTHENTISIERUNG EINES BENUTZERS UND EINES ENDGERÄTS**
METHOD FOR AUTHENTICATION OF A USER AND A TERMINAL
PROCEDE PERMETTANT L'IDENTIFICATION D'UN UTILISATEUR ET D'UN TERMINAL

(30) Priorität: 30.07.1999 DE 19935945
(43) Veröffentlichungstag der Anmeldung: 29.05.2002
(73) Patentinhaber: Giesecke & Devrient GmbH, 81677 München (DE)
(72) Erfinder: MÖDL, Albert, D-86368 Gersthofen (DE); STEPHAN, Elmar, D-81371 München (DE); MÜLLER, Robert, D-81673 München (DE)
(74) Vertreter: Klunker . Schmitt-Nilson . Hirsch
(86) Internationale Anmeldenummer: PCT/EP2000/007122
(87) Internationale Veröffentlichungsnummer: WO 2001/009849

(56) Entgegenhaltungen:
- EP-A- 0 875 868
- US-A- 5 208 447
- US-A- 5 239 166
- US-A- 5 721 781

## Beschreibung

Die vorliegende Erfindung betrifft allgemein die Authentisierung bei der Benutzung von Datenträgern wie Chipkarten und dergleichen, und insbesondere ein Authentisierungsverfahren, einen Datenträger sowie ein Authentisierungssystem umfassend einen Datenträger und ein Endgerät (Terminal).

Zum Nachweis, daß ein Benutzer zur Benutzung einer Chip- oder Magnetstreifenkarte tatsächlich berechtigt bzw. autorisiert ist, dient üblicherweise eine individuelle Geheimzahl, beispielsweise eine sogenannte PIN (Persönliche Identifizierungs Nummer). Die PIN ist auf der Karte gespeichert und wird, nachdem die Karte in ein Endgerät eingeführt worden ist, mit der dem Endgerät von dem Benutzer angegebenen PIN verglichen. Ist der Vergleich positiv, so kann vom Endgerät z. B. auf geschützte Bereiche der Chipkarte, beispielsweise Speicherbereiche, zugegriffen werden.

Die Benutzung von PINs ist problematisch, weil die Karte in Kenntnis der PIN von jedermann benutzt werden kann. Die Karte ist also nicht an den eigentlichen Karteninhaber, sondern an den PIN-Inhaber gebunden. Durch freiwillige oder unfreiwillige Weitergabe der PIN ist somit ein Mißbrauch der Karte möglich. PINs sind auch insofern unsicher, als sie einerseits vergessen und andererseits ausgespäht werden können.

Selbst wenn sich ein berechtigter Benutzer durch Eingabe seiner PIN ausgewiesen hat, ist das System nur teilweise autorisiert - nämlich der Benutzer gegenüber der Karte beziehungsweise dem Endgerät. Eine Autorisierung des Endgeräts gegenüber der Karte oder dem Benutzer findet nicht statt. Handelt es sich um ein gefälschtes Endgerät, so besteht die Gefahr, daß die PIN mittels dem gefälschten Endgerät ausgespäht wird. Die PIN allein stellt daher keine ausreichende Sicherung dar, weil eine Authentisierung des Endgeräts gegenüber der Karte bzw. gegenüber dem Benutzer fehlt.

Aus US 5,239,166 ist ein System für einen sicheren Datenaustausch, bestehend aus einer Karte und einem Terminal, bekannt. Bei dem bekannten System überprüfen sich Karte und Terminal gegenseitig. Der Benutzer der Karte wird mittels biometrischer Merkmale, z. B. einem Fingerabdruck, überprüft.

Aus US 5,208,447 ist ein Verfahren zur Überprüfung von Terminals mit einer Chipkarte bekannt, bei dem ein in der Chipkarte gespeichertes Kennwort sowohl verschlüsselt als auch unverschlüsselt an das Terminal gesendet wird. Das verschlüsselte Kennwort wird im Terminal entschlüsselt und mit dem unverschlüsselt gesendeten Kennwort verglichen. Stimmt das entschlüsselte Kennwort mit dem unverschlüsselten Kennwort überein, handelt es sich um ein berechtigtes Terminal.

Der vorliegenden Erfindung liegt die Aufgabe zugrunde, den Authentisierungsvorgang sicherer zu gestalten. Insbesondere besteht die der Erfindung zugrunde liegende Aufgabe darin, ein Authentisierungsverfahren zur Authentisierung sowohl des Benutzers als auch des Terminals vorzuschlagen, wodurch die individuelle Berechtigung des Benutzers und die Echtheit des Terminals überprüfbar sind.

Diese Aufgabe wird erfindungsgemäß durch ein Authentisierungsverfahren/gemäß Anspruch 1 gelöst.

In den Unteransprüchen sind vorteilhafte Ausgestaltungen der Erfindung angegeben.

Der erfindungsgemäßen Lösung liegt der Gedanke zugrunde, daß der Authentisierungsvorgang sicherer gestaltet werden kann, wenn zunächst die Echtheit des Terminals geprüft wird und dem Terminal anschließend biometrische Daten des Benutzers präsentiert werden. Biometrische Daten, wie ein Fingerabdruck oder dergleichen, sind im Gegensatz zu einer PIN eindeutig benutzerspezifisch. Durch das vorherige Prüfen der Echtheit des Terminals wird gewährleistet, daß ein Ausspähen der sensiblen, benutzerspezifischen biometrischen Daten verhindert wird. Das Prüfen der Echtheit des Endgeräts geschieht in der Weise, daß ein auf dem Datenträger fest gespeicherter Geheimcode, der nur dem Benutzer bekannt ist, von dem Endgerät ausgelesen und dem Benutzer angezeigt wird. Nur wenn der Geheimcode korrekt angezeigt wird, wird der Benutzer dem Endgerät das biometrische Merkmal präsentieren, um sich gegenüber dem Endgerät bzw. dem Datenträger als berechtigter Benutzer auszuweisen. Der Geheimcode kann auf dem Datenträger auf einem nur durch autorisierte Endgeräte zugreifbaren Speicherplatz gespeichert sein und/oder nur von einem autorisierten Endgerät korrekt entschlüsselt werden.

Nachdem die Authentisierung des Terminals erfolgt ist, wird durch Präsentieren des benutzerspezifischen biometrischen Merkmals und Vergleich der von dem biometrischen Merkmal erfaßten Daten mit auf dem Datenträger gespeicherten biometrischen Daten, im Gegensatz zum PIN-Vergleich, eine benutzerindividuelle Authentisierung gegenüber dem Datenträger bzw. dem Endgerät erreicht.

Zusätzlich zur biometrischen Authentisierung des Benutzers kann eine PIN-Authentisierung des Benutzers durch Eingabe einer PIN und Vergleich der eingegebenen PIN mit auf dem Datenträger gespeicherter PIN erfolgen.

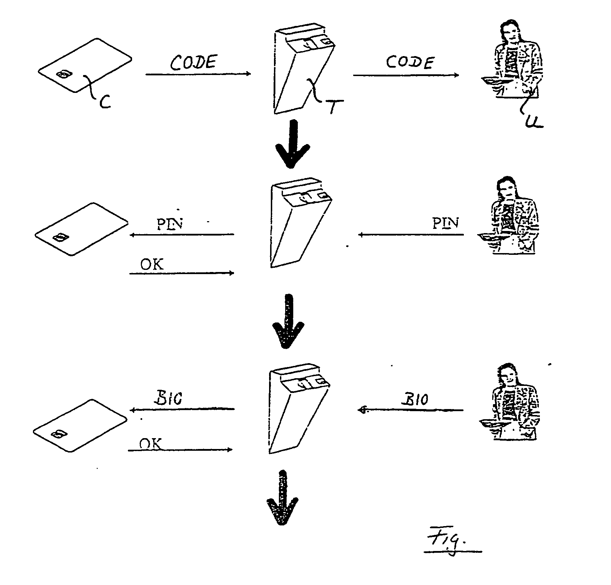

Die Erfindung wird nachfolgend beispielhaft anhand der einzigen Figur dargestellt.

Der in der Figur dargestellte Authentisierungsvorgang umfaßt drei Schritte, von denen der zweite Schritt auch entfallen kann.

Im ersten Schritt liest ein Endgerät T (Terminal) von einem ersten Speicherbereich eines Datenträgers C, beispielsweise einer Chipkarte, einen Geheimcode (CODE) aus und präsentiert diesen CODE dem Benutzer U (User). Der CODE ist auf der Chipkarte C beispielsweise auf einem zugriffsgeschützten Speicherplatz und/ oder in verschlüsselter Form abgespeichert, so daß der CODE nur von einem "echten" Terminal T, das entweder zugriffsberechtigt ist oder den Entschlüsselungsalgorithmus kennt, ausgelesen und dem Benutzer U angezeigt werden kann.

Wenn der Benutzer U den von dem Terminal T ausgelesenen CODE als seinen Geheimcode wiedererkennt, wird er die weiteren Authentisierungsschritte vornehmen. Im dargestellten Fall wird er dem Terminal T zunächst seine PIN angeben. Die PIN wird dann, vorzugsweise in verschlüsselter Form, an die Chipkarte C weitergeleitet, wo sie entschlüsselt und mit einer auf der Chipkarte C abgespeicherten PIN verglichen wird, und dem Terminal T wird anschließend das Ergebnis des Vergleichs mitgeteilt. Der Datentransfer, insbesondere der Transfer des CODE's, der PIN und der nachfolgend noch zu beschreibenden biometrischen Daten BIO erfolgt vorzugsweise in verschlüsselter Form, um ein Ausspähen dieser sensiblen Daten zu erschweren.

Sofern der PIN-Vergleich positiv war ("OK"), führt das Terminal T den Authentisierungsprozeß fort, indem nunmehr die benutzerindividuelle Authentisierung mittels biometrischer Merkmale des Benutzers erfolgt. Dazu präsentiert der Benutzer dem Terminal T ein biometrisches Merkmal, beispielsweise einen Fingerabdruck oder die Iris eines Auges. Das biometrische Merkmal wird vom Terminal T erfaßt und in biometrische Daten BIO umgewandelt, die, vorzugsweise in verschlüsselter Form, an die Chipkarte C weitergeleitet werden. Dort werden die eingelesenen biometrischen Daten des Benutzers mit auf der Chipkarte C gespeicherten biometrischen Daten verglichen. Im Falle eines positiven Vergleichs ("OK") wird das Terminal T für die Eingabe weiterer Benutzerkommandos freigegeben.

## Patentansprüche

1. Verfahren zum Authentisieren eines Benutzers (U) eines Datenträgers (C) zur berechtigten Benutzung des Datenträgers und zum Authentisieren eines Datenträgerendgerätes (T) zum berechtigten Zugreifen des Datenträgerendgerätes auf Speicherbereiche des Datenträgers, umfassend folgenden Schritte:
- Auslesen eines Geheimcodes (CODE) von dem Datenträger (C) durch das Datenträgerendgerät (T), wobei der Geheimcode (CODE) in einem nur für autorisierte Datenendgeräte (T) zugreifbaren Speicherplatz gespeichert ist und/oder nur von einem autorisierten Datenendgerät (T) korrekt entschlüsselt werden kann,
- Präsentieren des ausgelesenen Geheimcodes (CODE) gegenüber dem Benutzer (U),
- Wenn der Benutzer (U) den von dem Terminal (T) ausgelesenen Geheimcode (CODE) als seinen Geheimcode wiedererkennt, wird er die weiteren Authentisierungsschritte vornehmen,
- Präsentieren eines biometrischen Merkmals (BIO) eines Benutzers (U),
- Vergleichen des präsentierten biometrischen Merkmals (BIO) mit einem auf dem Datenträger (C) gespeicherten biometrischen Merkmal.

2. Verfahren nach Anspruch 1, **dadurch gekennzeichnet, daß** dem Terminal (T) desweiteren eine PIN präsentiert wird, die mit einer auf dem Datenträger (C) gespeicherten PIN verglichen wird.

3. Verfahren nach Anspruch 1 oder 2, **dadurch gekennzeichnet, daß** als biometrisches Merkmal (BIO) ein Fingerabdruck eines Benutzers (U) verwendet wird.

## Claims

1. A method for authenticating a user (*U*) of a data carrier (*C*) for authorized use of the data carrier and for authenticating a data carrier terminal (*T*) for authorized accessing by the data carrier terminal of memory areas of the data carrier, comprising the following steps:
- reading a secret code (*CODE*) from the data carrier (*C*) by the data carrier terminal (*T*), whereby the secret code (*CODE*) is stored on a memory location that can be accessed only by authorized data terminals (*T*) and/or can be decrypted correctly only by an authorized data terminal (*T*).
- presenting the read secret code (*CODE*) to the user (*U*),
- if the user (*U*) recognizes the secret code (*CODE*) read by the terminal (*T*) as his secret code, he will perform the further authentication steps,
- presenting a biometric feature (*BIO*) of a user (*U*),
- comparing the presented biometric feature *(BIO)* with a biometric feature stored on the data carrier (*C*).

2. A method according to claim 1, **characterized in that** a PIN is in addition presented to the terminal (*T*), being compared with a PIN stored on the data carrier (*C*).

3. A method according to claim 1 or 2, **characterized in that** a fingerprint of a user (*U*) is used as the biometric feature (*BIO*)*.*

## Revendications

1. Procédé d'authentification d'un utilisateur (U) d'un support de données (C) pour autoriser l'utilisation du support de données et pour l'authentification d'un terminal d'utilisateur (T) du support de données autorisant ce dernier à accéder à des zones de mémoire du support de données, comprenant les étapes suivantes :
- lecture d'un code confidentiel (CODE) du support de données (C) par le terminal d'utilisateur (T) du support de données, le code confidentiel (CODE) étant stocké dans une zone de mémoire uniquement accessible par des terminaux d'utilisateur autorisés (T) et/ou ne pouvant être décrypté correctement au moyen d'un terminal d'utilisateur (T) autorisé,
- présentation du code confidentiel (CODE) tel que lu à l'utilisateur (U), lorsque l'utilisateur (U) reconnaît le code confidentiel (CODE) lu par le terminal (T) comme étant son code confidentiel, l'utilisateur procède aux étapes ultérieures d'authentification :
- présentation d'une caractéristique biométrique (BIO) d'un utilisateur (U),
- comparaison d'une caractéristique biométrique présentée (BIO) avec une caractéristique biométrique stockée dans le support de données (C).

2. Procédé selon la revendication 1, **caractérisé en ce qu'**on présente également au terminal (T) un code (PIN) qui est comparé à un code PIN stocké sur le support de données (C).

3. Procédé selon la revendication 1 ou 2, **caractérisé en ce qu'**on utilise en tant que caractéristique biométrique (BIO) l'empreinte digitale d'un utilisateur (U).
